(19) Europäisches Patentamt

European Patent Office

Office européen des brevets

(11) **EP 2 301 184 B1**

(12) **FASCICULE DE BREVET EUROPEEN**

(45) Date de publication et mention
de la délivrance du brevet:
**28.12.2011 Bulletin 2011/52**

(21) Numéro de dépôt: **09757412.3**

(22) Date de dépôt: **26.05.2009**

(51) Int Cl.:
***H04L 7/02*** (2006.01)      ***H04L 27/22*** (2006.01)

(86) Numéro de dépôt international:
**PCT/EP2009/056382**

(87) Numéro de publication internationale:
**WO 2009/147029 (10.12.2009 Gazette 2009/50)**

(54) **PROCEDE DE POURSUITE DE LA PHASE D'UN SIGNAL MODULE PAR MODULATION A PHASE CONTINUE ET DISPOSITIF DE SYNCHRONISATION METTANT EN OEUVRE LE PROCEDE**

VERFAHREN ZUM VERFOLGEN DER PHASE EINES DURCH PHASENKONTINUIERLICHE MODULATION MODULIERTEN SIGNALS UND DAS VERFAHREN IMPLEMENTIERENDE SYNCHRONISATIONSEINRICHTUNG

METHOD OF TRACKING THE PHASE OF A SIGNAL MODULATED BY CONTINUOUS-PHASE MODULATION AND SYNCHRONIZATION DEVICE IMPLEMENTING THE METHOD

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **06.06.2008 FR 0803171**

(43) Date de publication de la demande:
**30.03.2011 Bulletin 2011/13**

(73) Titulaire: **THALES**
**92200 Neuilly-sur-Seine (FR)**

(72) Inventeurs:
 • **KOZLOVSKY, Nicolas**
 **F-78000 Versailles (FR)**
 • **POLAERT, Jean**
 **F-78540 Vernouillet (FR)**
 • **KIJEWSKI, Martial**
 **F-78280 Guyancourt (FR)**

(74) Mandataire: **Lucas, Laurent Jacques et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**FR-A- 2 845 546      US-A- 5 495 510**
**US-A- 6 075 408**

 • **INHYOUNG KIM ET AL: "Differential detection based timing recovery for continuous phase modulation" VEHICULAR TECHNOLOGY CONFERENCE, 1999 IEEE 49TH HOUSTON, TX, USA 16-20 MAY 1999, PISCATAWAY, NJ, USA, IEEE, US, vol. 1, 16 mai 1999 (1999-05-16), pages 108-112, XP010341980 ISBN: 978-0-7803-5565-1**
 • **HUBER J ET AL: "DATA-AIDED SYNCHRONIZATION OF COHERENT CPM-RECEIVERS" IEEE TRANSACTIONS ON COMMUNICATIONS, IEEE SERVICE CENTER, PISCATAWAY, NJ, US, vol. 40, no. 1, 1 janvier 1992 (1992-01-01), pages 178-189, XP000274963 ISSN: 0090-6778**
 • **SIMON M K ET AL: "BIT SYNCHRONIZATION OF DIFFERENTIALLY DETECTED MSK AND GMSK" INTERNATIONAL CONFERENCE ON COMMUNICATIONS. CHICAGO, JUNE 23 - 26, 1985; [INTERNATIONAL CONFERENCE ON COMMUNICATIONS], NEW YORK, IEEE, US, vol. 2, 1 juin 1985 (1985-06-01), pages 583-590, XP000795164**
 • **AULIN T ET AL: "SYNCHRONIZATION PROPERTIES OF CONTINUOUS PHASE MODULATION" GLOBAL TELECOMMUNICATIONS CONFERENCE. MIAMI, NOV.29 - DEC.2, 1982; [GLOBAL TELECOMMUNICATIONS CONFERENCE], NEW YORK, I.E.E.E, US, vol. 2, 1 novembre 1982 (1982-11-01), pages 877-883, XP000793983**

- **BUDA DE R: "COHERENT DEMODULATION OF FREQUENCY-SHIFT KEYING WITH LOW DEVIATION RATIO" IEEE TRANSACTIONS ON COMMUNICATIONS, IEEE SERVICE CENTER, PISCATAWAY, NJ, US, vol. COM-20, no. 3, 1 juin 1972 (1972-06-01), pages 429-435, XP000758911 ISSN: 0090-6778 cité dans la demande**

- **SHANE M R ET AL: "Reduced complexity iterative demodulation and decoding of serial concatenated continuous phase modulation" PROCEEDINGS OF IEEE INTERNATIONAL CONFERENCE ON COMMUNICATIONS - 28 APRIL-2 MAY 2002 - NEW YORK, NY, USA, IEEE, PISCATAWAY, NJ, USA, vol. 3, 28 avril 2002 (2002-04-28), pages 1672-1676, XP010589771 ISBN: 978-0-7803-7400-3 cité dans la demande**

## Description

L'invention concerne un procédé de poursuite de la phase d'un signal modulé par modulation à phase continue et un dispositif de synchronisation mettant en oeuvre le dispositif. Elle s'applique notamment au domaine des communications numériques.

Dans un système de communications numériques, un signal est émis par un émetteur vers un récepteur via un canal de transmission. Le signal est modulé, c'est-à-dire que l'on fait varier les caractéristiques d'une onde porteuse de manière à transporter de l'information (typiquement représentée à l'aide de symboles binaires '0' et '1'). Dans le cas d'une modulation de phase, l'information utile est transmise en faisant varier la phase du signal à transmettre. Le récepteur aura pour but de démoduler le signal, c'est à dire de détecter les variations de la phase du signal en réception. Les modulations à phase continue (CPM pour « Continuous Phase Modulation » en langue anglaise) forment une famille particulière des modulations de phase pour lesquelles les variations de la phase du signal se font de manière continues d'un symbole à l'autre. Pour d'autres types de modulations de phase comme les M-PSK (modulation à M états de phase, PSK signifiant « Phase Shift Keying » en langue anglaise), on peut observer entre deux symboles des variations importantes de la phase du signal. Celles-ci ont pour conséquences un élargissement du spectre, c'est à dire de la bande occupée par le signal. Pour ce qui est des modulations à phase continues, de par le fait qu'elles induisent une variation continue de la phase du signal, celles-ci permettent d'obtenir de bonnes performances en terme d'efficacité spectrale.

La modulation GMSK, pour « Gaussian Minimum Shift Keying » en langue anglaise, est une modulation appartenant à la famille des modulations à phase continue. Celle-ci a pour propriété d'utiliser un filtre gaussien utilisé pour filtrer les données avant de moduler l'onde porteuse. Ce filtre a pour effet de rendre les transitions de phase d'un symbole à l'autre plus progressives que, par exemple, pour une modulation MSK (« Minimum Shift Keying »). Les caractéristiques de cette modulation permettent d'utiliser efficacement l'amplificateur de puissance côté émetteur car celui-ci peut travailler en zone de saturation. Ces propriétés rendent la modulation GMSK particulièrement adaptée aux transmissions par satellites. A titre d'exemple, un futur système de navigation et de collecte de données par satellite utilisera cette modulation couplée avec un codeur convolutif de rendement 1/2.

Pour qu'un système de télécommunications fonctionne correctement, il est nécessaire de synchroniser le récepteur sur le signal reçu. En effet, si ce n'est pas le cas, les performances en réception seront dégradées par augmentation notamment du taux d'erreur binaire. Même si l'émetteur et le récepteur ont leurs horloges internes synchronisées à l'initialisation de la communication, cette situation peut changer au cours du temps. En prenant l'exemple des télécommunications sans fil, lorsque l'émetteur et le récepteur sont en mouvement relatif l'un par rapport à l'autre, l'effet Doppler introduit un décalage fréquentiel et temporel sur le signal reçu. La perte de synchronisation a également d'autres causes, comme les imperfections des oscillateurs utilisés par l'émetteur et le récepteur. Il est donc nécessaire lors de la conception d'un système de télécommunications de considérer cet aspect et d'utiliser des algorithmes de synchronisation efficaces. Une manière d'estimer la fiabilité de ces algorithmes est de comparer leurs performances d'estimation à la borne de Cramer-Rao. Cette borne indique la plus grande précision pouvant être obtenue par un estimateur.

Les procédés connus de synchronisation de signaux utilisant une modulation à phase continue, comme les modulations MSK ou GMSK, utilisent notamment ces deux types de méthodes.

La première méthode est dite NDA (pour « non data aided » en langue anglaise) et est dérivée du procédé décrit par Rudi de Buda dans son article « Coherent Demodulation of Frequency-Shift Keying With Low Deviation Ratio » (IEEE transactions on communications, juin 1972). Par exemple, la modulation GMSK avec B.Ts=0.5, B.Ts étant le produit de la bande du signal et de la période symbole, peut être considéré comme un cas particulier de la modulation FSK à deux fréquences F1 et F2. La méthode est basée sur l'élévation au carré du signal modulé et permet de retrouver une raie à la fréquence 2*F1 et une raie à la fréquence 2*F2. A partir de ces 2 raies il est possible de retrouver un signal de porteuse et une horloge rythme. Le défaut de ce procédé est que à faible rapport Es/N0 (rapport entre l'énergie symbole et la densité spectrale de puissance du bruit en réception) et du fait de l'élévation au carré, le bruit de phase est à un niveau très élevé, ce qui oblige l'emploi de boucles à verrouillage de phase avec une bande de boucle réduite à quelques Hertz, ce qui est incompatible avec l'évolution du décalage du à l'effet Doppler dans le cas, par exemple, d'un signal reçu par un récepteur sur satellite.

La seconde méthode connue est d'employer une sous-porteuse pilote ou bien une séquence pilote. L'emploi d'une sous-porteuse pendant la transmission des données complexifie l'émetteur, et ne permet plus de faire fonctionner l'émetteur à saturation de son amplificateur de puissance. De ce fait, pour une puissance d'alimentation donnée, on dispose de moins de puissance utile pour la transmission des données en raison de la présence de la sous-porteuse qui enlève de cette puissance utile et en raison du nécessaire recul de puissance de l'émetteur pour générer le signal utile et la sous-porteuse sans intermodulations gênantes. Le recul de puissance d'un émetteur est le procédé qui consiste à employer son amplificateur de puissance à niveau d'entrée réduit, ou reculé, pour le faire fonctionner dans une zone quasi linéaire.

Le document FR 2 845 546 décrit un procédé et un dispositif pour un estimateur de décalages de phase et de fréquence combiné pour une transmission MPSK, dans lesquels l'intervalle d'observations total est divisé en sous-intervalles et est ensuite dépliée pour supprimer la discontinuité dans l'estimation de phase calculée. Le décalage de phase est ensuite calculé en mettant en moyenne les estimations de phases dépliées tandis que le décalage de fréquence est calculé en mettant en moyenne les différences entre les estimations de phases dépliées adjacentes.

## CITATION DES REVENDICATIONS

A cet effet l'invention a pour objet un procédé de poursuite de la phase d'un signal modulé par une modulation à phase continue à M états, échantillonné de manière à ce que au moins deux échantillons soient obtenus par période symbole et traité par portion de N symboles, ledit procédé étant caractérisé en ce que :

- un vecteur complexe V(n) représentatif de l'état d'amplitude et de phase du signal reçu est déterminé pour chaque période symbole avec un décalage d'une demi période symbole par rapport au rythme symbole du récepteur ;
- une mesure de niveau est effectuée pour chaque période symbole sur la partie réelle ou imaginaire de deux échantillons complexes U(n) et U(n-1) répartis avec un décalage sensiblement d'une demi période symbole de part et d'autre de l'instant d'estimation du vecteur complexe V(n) ;
- les vecteurs complexes V(n) sont associés pour chaque période symbole à un des M points de la constellation de la modulation à phase continue par une fonction de correspondance prenant en entrée les niveaux des échantillons U(n) et U(n-1) et permettant de trouver le point de la constellation le plus proche ;
- une estimation moyenne du décalage de la phase sur une période de N symboles est calculée pour chacun des M points de la constellation de la modulation à phase continue en faisant la différence entre l'estimation moyenne de la phase du signal et la valeur de phase théorique associée à chaque point de la constellation de la modulation à phase continue ;
- une estimation absolue du décalage de la phase sur une période de N symboles est calculée en faisant la moyenne des estimations moyennes du décalage de la phase associées à chacun des M points de la constellation de la modulation à phase continue ;
- une estimation différentielle du décalage de la phase sur une période de N symboles est calculée en faisant la moyenne des différences de décalages de phase moyens entre points consécutifs de la constellation.

Une variante de ce procédé est caractérisée en ce que la fonction de correspondance permettant d'associer les vecteurs complexes V(n) à un des M points de la constellation de la modulation à phase continue comprend une table de vérité se basant sur le résultat de la projection des échantillons complexes U(n) et U(n-1) sur l'axe réel ou imaginaire après avoir décidé d'une valeur en fonction du niveau détecté, c'est-à-dire '+1' pour un niveau de projection supérieur à 0 et '-1' pour un niveau de projection inférieur à 0, et faisant correspondre un des M symboles de la constellation à un couple de '-1/+1' calculé pour chaque couple d'échantillons U(n) et U(n-1).

Une variante de ce procédé est caractérisée en ce que le signal reçu est égalisé en fréquence avant l'estimation des vecteurs complexes V(n).

Une variante de ce procédé est caractérisée en ce le signal reçu est égalisé avant le traitement des échantillons U(n) et U(n-1) en utilisant un filtre adaptatif.

Une variante de ce procédé est caractérisée en ce que sur la durée de la période de traitement de N symboles et pour chaque point de la constellation, un vecteur complexe moyen (Vi(n)) est calculé à l'aide des vecteurs Vi(n) associés à chacun des points i de ladite constellation.

Une variante de ce procédé est caractérisée en ce que l'argument des vecteurs complexes moyens (Vi(n)) associés à chacun des M points de la constellation est comparé à l'argument théorique du point associé de la constellation et mène à une estimation du décalage moyen de la phase pour chacun de M points de la constellation.

L'invention a aussi pour objet un procédé de synchronisation d'un signal modulé par une modulation à phase continue à M états caractérisé en ce qu'il utilise le procédé de poursuite et en ce que :

- la phase du signal reçu est corrigée en paramétrant une boucle à verrouillage de phase avec l'estimation absolue du décalage de phase résultant de l'application du procédé ;
- le rythme symbole du récepteur est corrigé en paramétrant un filtre passe tout à retard programmable avec une valeur de retard temporel calculée à l'aide de l'estimation différentielle du décalage de phase résultant de l'application du procédé.

Une variante de ce procédé est caractérisée en ce que la valeur de retard temporel utilisée pour la poursuite du rythme symbole est calculée en utilisant une méthode de type proportionnelle intégrale.

Une variante de ce procédé est caractérisée en ce que l'estimation et la correction de la phase du signal sont réalisées de manière itérative, c'est-à-dire qu'une première estimation absolue du décalage de la phase est conduite sur N symboles du signal et qu'après correction de la phase appliquée à ces N symboles, l'erreur résiduelle après correction est ré-estimée pour une seconde correction, le processus pouvant être ainsi répété un nombre fois tel que choisi par l'utilisateur du procédé.

Une variante de ce procédé est caractérisée en ce que le décalage de phase absolu estimé après plusieurs itérations successives est la somme des estimations de décalage de phase obtenues après chaque itération.

L'invention a aussi pour objet un dispositif de réception mettant en oeuvre le procédé de synchronisation, ledit dispositif étant caractérisé en ce qu'il comporte au moins :

- un circuit radio fréquence permettant de convertir le signal en bande de base ;
- des moyens de traitement mettant en oeuvre le procédé de synchronisation ;
- une zone de mémoire permettant notamment de stocker les vecteurs complexes V(n), les niveaux des échantillons U(n), les estimations moyennes du décalage de la phase pour chacun des M points de la constellation de la modulation, ainsi que l'estimation moyenne globale du décalage de la phase sur une période de N symboles.

D'autres caractéristiques et avantages de l'invention apparaitront à l'aide de la description qui suit donné à titre illustratif et non limitatif, faite en regard des dessins annexés parmi lesquels :

- la figure 1 illustre, dans le cas où la synchronisation est établie, le lieu des phases d'un signal GMSK en réception ainsi que les valeurs de phase potentiellement détectables par le récepteur sur un diagramme I/Q ;
- la figure 2 donne un exemple de table de vérité utilisable dans le cadre de l'invention ;
- la figure 3 illustre, dans le cas où la synchronisation n'est pas établie, le lieu des phases d'un signal GMSK en réception ainsi que les valeurs de phase potentiellement détectables par le récepteur sur un diagramme I/Q ;
- la figure 4 illustre un exemple de dispositif mettant en oeuvre du procédé selon l'invention avec une itération ;
- la figure 5 illustre un exemple de dispositif mettant en oeuvre du procédé selon l'invention avec deux itérations ;
- la figure 6 donne un exemple de fonction d'écartométrie obtenue à faible rapport Eb/N0 après une première itération ;
- la figure 7 donne un exemple de fonction d'écartométrie obtenue à faible rapport Eb/N0 après une seconde itération.

Le procédé selon l'invention exploite les caractéristiques du lieu des phases des modulations à phase continue. Le lieu des phases est la représentation de l'évolution de la phase des états de la modulation en fonction du temps. Afin de décrire le plus clairement possible le fonctionnement et les avantages de l'invention, l'exemple de la modulation GMSK, déjà introduite précédemment, avec comme paramètre de configuration B.Ts=0.5, sera utilisé dans la suite de la description.
Comme précédemment souligné, la modulation GMSK avec B.Ts=0.5 est un cas particulier de la modulation FSK à deux fréquences F1 et F2 avec raccordement continu de phase tel que :

- F2 > F1 ;
- F2 - F1 = 0.5*D (avec D représentant le débit symbole exprimé en symboles par seconde).

Par convention, dans la suite de la description, la fréquence F1 sera appelée fréquence porteuse.

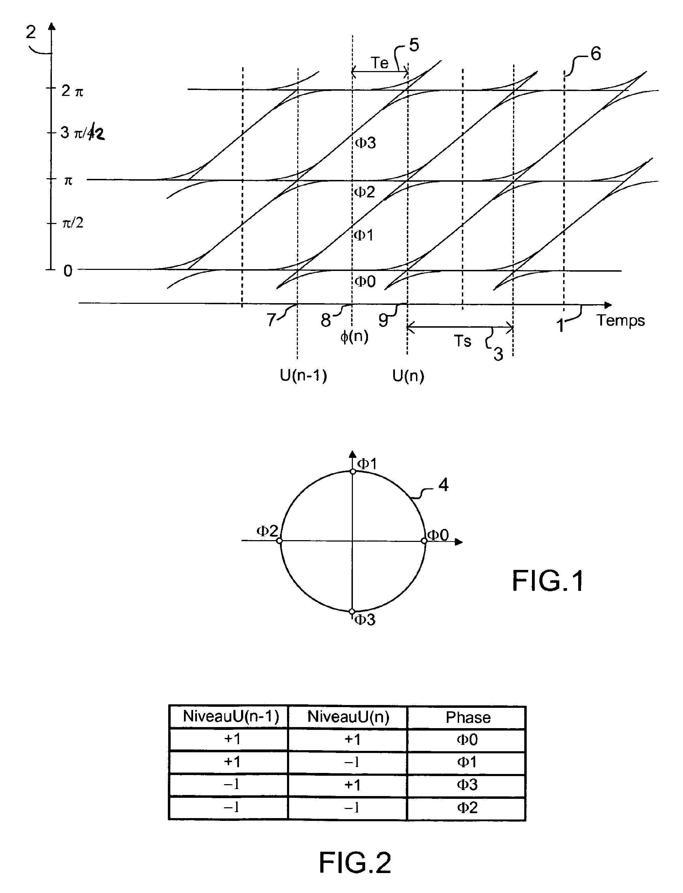

La figure 1 illustre, dans le cas où la synchronisation est établie, le lieu des phases du signal en réception (appelé également représentation de Rimoldi), en prenant F1 = 0Hz. Sur la même figure sont présentées les valeurs de phase 4 potentiellement détectables par le récepteur sur un diagramme I/Q. L'évolution du temps est représentée sur l'axe des abscisses 1 et celle de la phase sur l'axe des ordonnées 2. La période symbole 3 est notée Ts et la période échantillon 5, Te. Dans cet exemple, le signal GMSK est échantillonné à un rythme de 2 échantillons par symbole de manière à respecter le critère de Nyquist, soit Ts = 2*Te, mais le procédé fonctionne plus généralement avec Ts = k.Te avec k entier supérieur à 2. Sur la figure, les lignes verticales en pointillés 6 indiquent les instants d'échantillonnage.
Dans le cadre de l'invention, la phase du signal reçu est mesurée en réception au rythme d'une mesure par période symbole Ts : le récepteur mesure la phase du signal $\phi(n)$ à l'instant $(n-1)Ts + Ts/2$. Dans l'exemple de la modulation GMSK, la mesure de $\phi_0$ et de $\phi_2$ donne la phase de F1 modulo $\pi$ à l'instant $(n-1)Ts + Ts/2$. De la même manière, la mesure de $\phi_1$ et de $\phi_3$ donne la phase de F2 modulo $\pi$ à l'instant $(n-1)Ts + Ts/2$. Dans le cadre de l'invention, la phase du signal au n$^{ième}$ instant de mesure $\phi(n)$ correspond à la phase du signal à l'instant $(n-1)Ts + Ts/2$. A cet instant, un symbole GMSK peut prendre 4 valeurs de phase, soit $\phi_0$, $\phi_1$, $\phi_2$ ou $\phi_3$. Puisque le récepteur est correctement synchronisé, $\phi(n)$ prend nécessairement une de ces quatre valeurs. Le récepteur doit associer le signal reçu sur une période Ts à un symbole, c'est-à-dire à un état de phase. Selon l'invention, le symbole reçu est déduit du niveau mesuré sur les échantillons complexes suivants 7, 9:

- U(n-1) : échantillon de signal 7 à l'instant $(n-1)Ts$ ;
- U(n) : échantillon de signal 9 à l'instant $nTs$.

La mesure de phase est faite avec un décalage de ½ Ts (période symbole) par rapport à l'échantillonnage niveau de U(n-1) et U(n) 7, 9.
La correspondance entre la phase estimée à l'instant $(n-1)Ts + Ts/2$ et la phase estimée des échantillons U(n-1) et U(n) est réalisée, par exemple, à l'aide d'une table de vérité. Le choix de la valeur de phase reçue à l'instant $(n-1)Ts + Ts/2$ est donc choisi parmi les quatre valeurs possibles $\phi_0$, $\phi_1$, $\phi_2$ et $\phi_3$ que peuvent pren-

dre les symboles de la modulation GMSK et se base sur les valeurs de phase estimées sur les échantillons U(n-1) et U(n).

La figure 2 présente un exemple de table de vérité permettant de faire correspondre les niveaux mesurés sur les échantillons complexes U(n-1) et U(n) à un des points de la constellation de la modulation à phase continue considérée. Une mesure de niveau sur les échantillons U(n-1) et U(n) peut être réalisée en effectuant, par exemple, une projection des échantillons complexes sur l'axe des réels ou bien l'axe des imaginaires. Le résultat de cette projection est ensuite observé, et une valeur est choisi en fonction du niveau détecté, par exemple '+1' pour un niveau supérieur à 0 et '-1' pour un niveau inférieur à 0.

Dans le cas d'une modulation GMSK, les points de la constellation peuvent être caractérisés par leur phase pouvant prendre quatre valeurs possibles $\phi_0$ , $\phi_1$, $\phi_2$ et $\phi_3$. La table de vérité fait donc correspondre une de ces valeurs de phase à un couple de '-1/+1'.

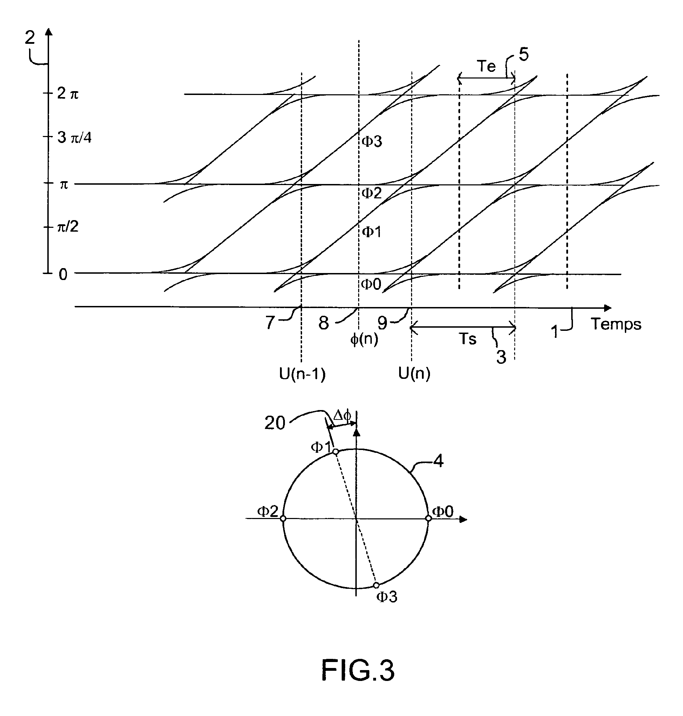

La figure 3 représente le lieu des phases dans l'hypothèse d'une désynchronisation du rythme bit. Il apparait qu'un décalage 20 sur la phase $\phi(n)$ est introduit en conséquence. En effet, si la phase et la fréquence porteuse sont connues a priori au début de la transmission, elles peuvent dériver durant la communication.

Selon l'invention, le procédé va estimer ce décalage de phase sur une période de N symboles. Le décalage de phase à l'instant (n-1)Ts + Ts/2 est noté $\Delta\phi(n)$. Selon l'invention, une estimation du décalage absolu de phase $\Delta\phi_P$ est estimée par bloc de N symboles avec, par exemple, N=32 symboles.

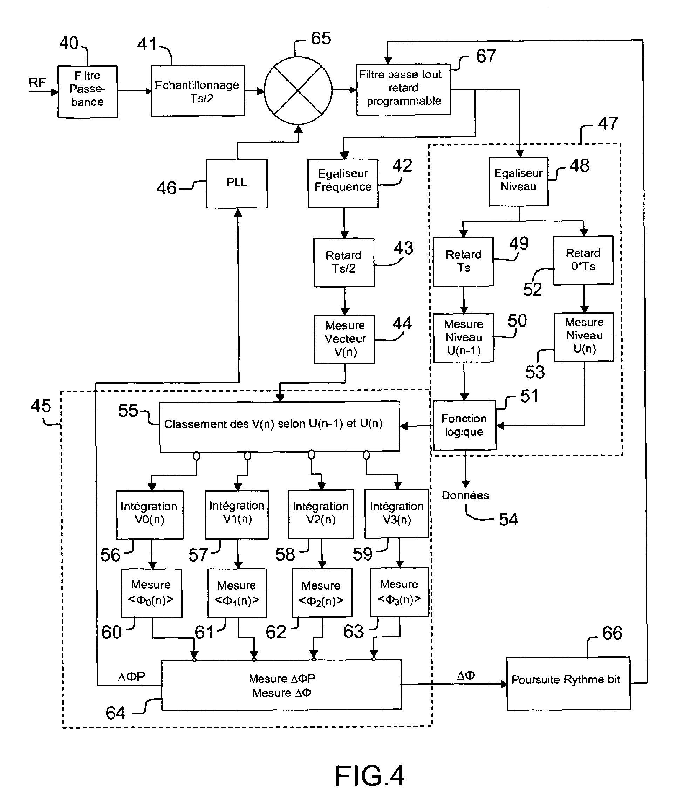

La figure 4 présente un exemple de dispositif de synchronisation mettant en oeuvre le procédé selon l'invention. Les blocs fonctionnels de la figure peuvent être implantés dans un dispositif au sein de blocs matériels ou logiciels. Le procédé est implanté, par exemple, dans un récepteur. Le signal GMSK est reçu et traité par un circuit radiofréquence réalisant notamment le passage en bande de base puis est transmis à un filtre passe bande 40. Le signal après filtrage est ensuite échantillonné 41 à la fréquence Fe = 1/Te = 2/Ts. Une boucle de Costas est ensuite mise en place. Celle-ci comprend :

- d'une fonction 65 permettant de corriger la phase du signal après échantillonnage ;
- d'une filtre passe tout à retard programmable 67 permettant de réaliser un glissement temporel continu, c'est-à-dire sans à-coup, et de corriger l'erreur de rythme bit introduite par l'échantillonnage ;
- d'un équaliseur de fréquence 42 prenant en entrée le signal après filtrage passe tout 67 et offrant un compromis entre la qualité de la mesure à faible Es/N0 et une bonne précision à fort Es/N0, ledit égaliseur étant réalisé avec un filtre numérique passe tout dans le cas d'une modulation GMSK, avec B.Ts = 0,5 ;
- d'une fonction 43, prenant en entrée le signal après égalisation en fréquence 42, introduisant un retard de Ts/2 sur ledit signal ;
- d'une fonction 44, prenant en entrée le signal après application du retard de Ts/2 43, mesurant un vecteur complexe V(n), lesdits vecteurs V(n) étant représentatifs des états de phase $\phi(n)$ et d'amplitude $A_n$ du signal reçu à l'instant (n-1)*Ts + Ts/2 et pouvant en utilisant la notation complexe : $V(n) = A_n e^{j\Phi(n)}$ ;
- d'une fonction 45, prenant en entrée les vecteurs V (n) calculés 44, réalisant l'estimation absolue du décalage de phase $\Delta\phi_P$ et l'estimation différentielle du décalage de phase $\Delta\phi$ sur une période de N symboles ;
- d'une boucle à verrouillage de phase 46 (plus connue sous la dénomination anglo-saxonne « Phase Locked Loop » - PLL), prenant en entrée l'estimation du décalage de phase absolu $\Delta\phi_P$ et dont la sortie est utilisée afin de corriger 65 la phase du signal après échantillonnage.

La boucle de Costas est un procédé bien connu permettant d'effectuer une démodulation synchrone pour laquelle il faut effectuer un contrôle précis de la phase du signal. Le procédé selon l'invention propose une boucle de Costas modifiée en ajoutant en parallèle de la boucle de Costas classique un ensemble de fonctions 47 permettant de mesurer le niveau des échantillons U (n-1) et U(n). Cet ensemble de fonctions se décompose de la manière suivante :

- le signal en sortie du filtre passe-tout à retard programmable 67 est traité par un égaliseur de niveau 48, ledit égaliseur de niveau étant un filtre FIR faisant, par exemple, fonction de filtre adapté à 3 branches et traitant le signal en privilégiant la qualité de la décision en présence de bruit ; l'utilisation de ce filtre et une description détaillée de son utilisation est disponible dans l'article « Reduced complexity iterative demodulation and decoding of serial concatenated continuous phase modulation », Mark R. Shane, Richard D. Wesel, IEEE International Conference on Communications, 2002 ;
- le signal résultant de l'égalisation de niveau 48 est traité par une fonction 49 introduisant un retard Ts ;
- une mesure 50 du niveau de l'échantillon U(n-1), échantillon de signal 7 à l'instant (n-1)Ts, est ensuite effectué sur le signal après application du retard Ts 49 ; « mesure de niveau » signifie que l'échantillon complexe de signal est projeté, par exemple, sur l'axe des réels ; si cette valeur réelle a une valeur supérieure à zéro, la fonction 50 présentera en sortie un '+1' ; si cette valeur réelle a une valeur inférieure à zéro, la fonction 50 présentera en sortie un '-1' ;
- le signal résultant de l'égalisation de niveau 48 est traité par une fonction 52 introduisant un retard 0*Ts ;
- une mesure 53 du niveau de l'échantillon U(n), échantillon de signal 9 à l'instant n.Ts, est ensuite effectuée sur le signal après application du retard 0*Ts 52 ; « mesure de niveau » signifie que l'échantillon complexe de signal est projeté, par exemple, sur l'axe des réels ; si cette valeur réelle a une valeur supérieure à zéro, la fonction 53 présentera en sortie un '+1' ; si cette valeur réelle a une valeur inférieure à zéro, la fonction 53 présentera en sortie un '-1' ;

- Les niveaux de U(n) et U(n-1) en sortie des fonctions de mesure de niveau 50, 53 sont ensuite traités par une fonction logique 51 permettant d'associer les valeurs de niveaux de U(n) et U(n-1) à un point de la constellation GMSK ; pour cela, on pourra par exemple utiliser la table de vérité représenté figure 2.

La connaissance des niveaux de U(n-1) et de U(n), disponible en sortie des fonctions de mesure de niveau 50, 53 permet de retrouver les données binaires portées par le signal 54.

L'ensemble de fonctions 45 réalisant l'estimation du décalage de phase $\Delta\phi_P$ sur une période de N symboles comprend une fonction de classement des vecteurs V(n) 55 utilisant en entrée les vecteurs V(n) résultant de la fonction de mesure 44 et le résultat de la fonction logique 51, par exemple un identifiant du point de la constellation GMSK associé au vecteur V(n). Cet ensemble de fonction 45 comprend par ailleurs un ensemble de quatre filtres intégrateurs 56, 57, 58, 59 prenant en entrée les vecteurs classés par la fonction de classement des vecteurs complexes V(n) 55 consistant respectivement en quatre groupes de vecteurs $V_0(n)$, $V_1(n)$, $V_2(n)$ et $V_3(n)$, chaque groupe étant associé à un point de la constellation GMSK. Utilisant ces entrées, les filtres intégrateurs 56, 57, 58, 59 calculent respectivement des vecteurs moyens $\langle V_0(n)\rangle$, $\langle V_1(n)\rangle$, $\langle V_2(n)\rangle$ et $\langle V_3(n)\rangle$, la notation $\langle . \rangle$ désignant une valeur moyenne calculée sur N symboles. Ces vecteurs moyens fournis en sortie des filtres intégrateurs 56, 57, 58, 59 sont transmis à un banc de fonctions de mesures 60, 61, 62, 63 dont le but est de calculer respectivement la moyenne des angles $\langle\phi_0(n)\rangle$, $\langle\phi_1(n)\rangle$, $\langle\phi_2(n)\rangle$ et $\langle\phi_3(n)\rangle$ sur N symboles. Ces moyennes pourront être déduites du résultat des filtres intégrateurs 56, 57, 58, 59 en utilisant, par exemple, les formules suivantes :

$$\langle\Phi_0(n)\rangle = \arg\{\langle V_0(n)\rangle\}$$

$$\langle\Phi_1(n)\rangle = \arg\{\langle V_1(n)\rangle\}$$

$$\langle\Phi_2(n)\rangle = \arg\{\langle V_2(n)\rangle\}$$

$$\langle\Phi_3(n)\rangle = \arg\{\langle V_3(n)\rangle\}$$

Il est également possible, dans une mise en oeuvre alternative du procédé, d'estimer la valeur moyenne des phases en se basant sur la valeur moyenne de la phase de chaque vecteur, mais dans ce cas les performances d'estimation obtenues seront alors moins bonnes à valeur faible de rapport Eb/N0.

Les formules deviendront dans ce cas :

$$\langle\Phi_0(n)\rangle = \langle\arg\{V_0(n)\}\rangle$$

$$\langle\Phi_1(n)\rangle = \langle\arg\{V_1(n)\}\rangle$$

$$\langle\Phi_2(n)\rangle = \langle\arg\{V_2(n)\}\rangle$$

$$\langle\Phi_3(n)\rangle = \langle\arg\{V_3(n)\}\rangle$$

Les angles moyens $\langle\phi_0(n)\rangle$, $\langle\phi_1(n)\rangle$, $\langle\phi_2(n)\rangle$ et $\langle\phi_3(n)\rangle$ en sortie des fonctions de mesures 60, 61, 62, 63 sont en ensuite utilisées par un fonction 64 permettant de déterminer une valeur absolue de décalage de phase $\Delta\phi_P$ et une valeur différentielle de décalage de phase $\Delta\phi$ par bloc de N symboles en calculant le décalage des valeurs moyennes par rapport à leurs valeurs nominales, les valeurs nominales étant les valeurs de la phase des points de la constellation soit 0, $\pi/2$, $\pi$ et $3\pi/2$. Le décalage moyen peut alors être exprimé pour chacun des points de la modulation GMSK par :

$$\Delta\Phi_0 = 0 - \langle\Phi_0(n)\rangle$$

$$\Delta\Phi_1 = \pi/2 - \langle\Phi_1(n)\rangle$$

$$\Delta\Phi_2 = \pi - \langle\Phi_2(n)\rangle$$

$$\Delta\Phi_3 = 3\pi/2 - \langle\Phi_3(n)\rangle$$

La valeur absolue de décalage de phase $\Delta\phi_P$ sur N symboles correspondant au glissement moyen de la constellation est déduite en utilisant, par exemple, l'expression suivante :

$$\Delta \Phi_P = \frac{1}{4}\left(\Delta \Phi_0 + \Delta \Phi_1 + \Delta \Phi_2 + \Delta \Phi_3\right)$$

Cette valeur est ensuite transmise en entrée de la boucle à verrouillage de phase 46 afin de corriger 65 la phase du signal reçu de la valeur de décalage estimée.

La valeur différentielle du décalage de phase $\Delta\phi$ est utilisée afin de mettre à jour la valeur du rythme bit appliquée par le récepteur au signal reçu. Celle-ci est calculée en faisant la moyenne des différences de décalages de phase moyens entre points consécutifs de la constellation. Pour le cas d'une modulation à quatre états comme la GMSK, l'expression suivante est utilisée :

$$\Delta \Phi = \frac{1}{2}\left(\left(\Delta \Phi_1 - \Delta \Phi_0\right) + \left(\Delta \Phi_3 - \Delta \Phi_2\right)\right)$$

Cette valeur calculée par la fonction de calcul du décalage de phase 64 est utilisée en entrée d'une fonction de poursuite du rythme bit 66 dont la sortie est une valeur de retard temporel, ladite valeur étant calculée par exemple à l'aide d'une méthode de type proportionnelle intégrale, et est utilisée afin de paramétrer le filtre RIF (Réponse Impulsionnelle Finie) 67, de type passe tout à retard programmable. La poursuite rythme se fait par un asservissement qui maintient la valeur de décalage de phase $\Delta\phi$ à zéro. Le filtre passe tout 67 programmable permet de réaliser un glissement temporel continu, c'est-à-dire sans à-coup.

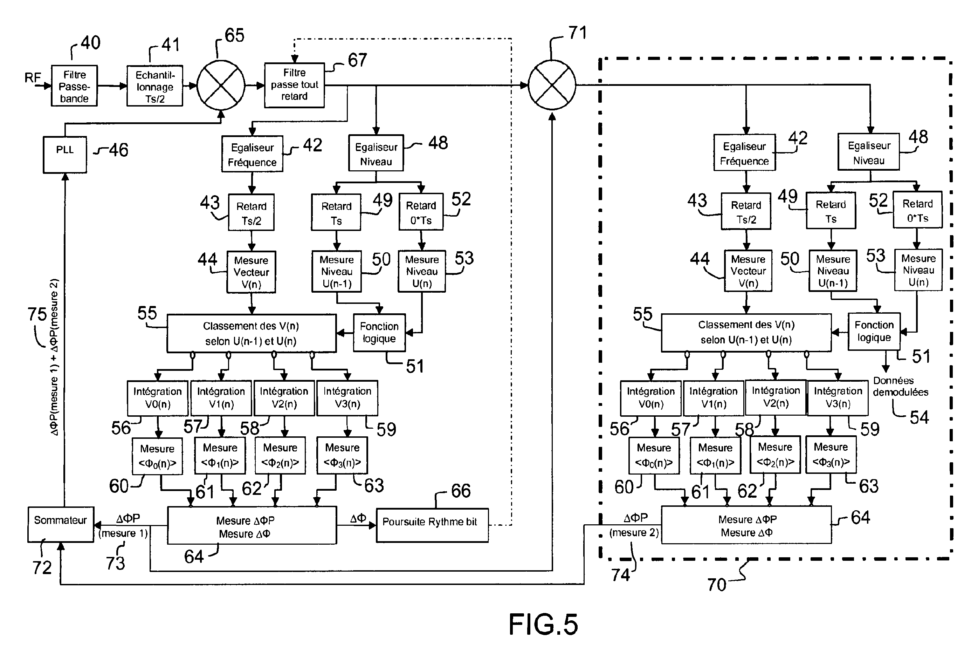

La figure 5 illustre une variante du dispositif présenté figure 4. Un moyen d'améliorer la mesure de phase est de réitérer la mesure en faisant tourner la phase de référence de la valeur mesurée précédemment et en remesurant la phase ensuite. Le décalage de phase estimé à la suite de cette itération est égale à $\Delta\Phi_P$(P*remièreMesure*)+$\Delta\Phi_P$(*DeuxièmeMesure*). Ce processus peut se répéter plusieurs fois. La figure 5 illustre cette variante pour le cas où deux itérations sont réalisées. Une partie des blocs fonctionnels de la figure 4 décrite précédemment sont dupliqués 70 et prennent en entrée le signal après filtrage passe tout 67 et correction de phase 71 en utilisant la première estimation absolue $\Delta\phi_P$ 73. Une deuxième mesure de $\Delta\phi_P$ 74 est obtenue et additionnée à la première à l'aide d'une fonction de sommation 72. La somme des deux mesures 75 est utilisée en entrée de la boucle à verrouillage de phase 46 afin de corriger la phase 65 du signal reçu après échantillonnage.

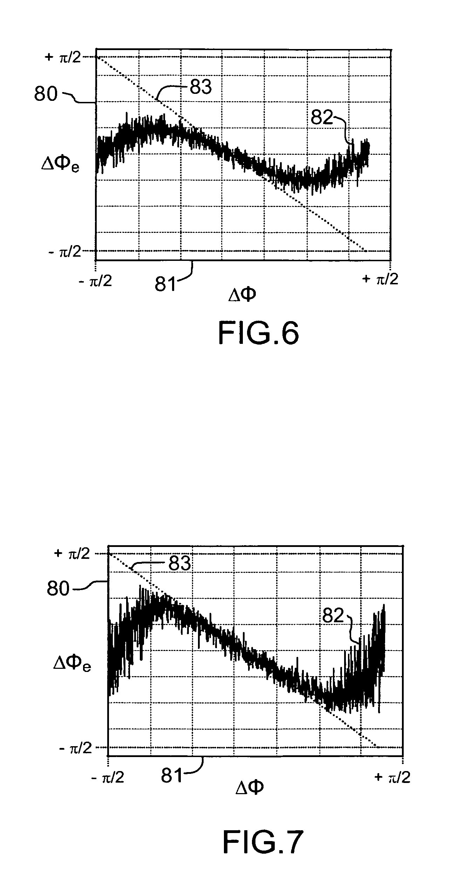

La figure 6 donne un exemple de fonction d'écartométrie obtenue à faible valeur du rapport Es/N0 en utilisant l'exemple de dispositif mettant en oeuvre le procédé décrit précédemment. La fonction d'écartométrie montre la différence entre la valeur de décalage de la phase du signal appliquée artificiellement par simulation (valeurs lues en ordonnées 80) et la valeur effectivement mesurée après application du procédé (valeurs lues en abscisse 81). Les résultats de mesure de phase présentés figure 6 ont été obtenus après intégration sur 101 symboles pour Es/N0 = 0 dB. Un algorithme fournissant une estimation du décalage idéal présenterait des résultats similaires à la ligne droite 83. Le résultat de l'estimation après application du procédé selon l'invention 82 présente une zone linéaire autour de zéro, signe d'une bonne performance de l'algorithme.

La figure 7 présente les résultats de simulation obtenus après une seconde itération. La plage linéaire de l'estimateur est plus étendue ce qui signifie que les performances de l'estimation sont améliorées.

**Revendications**

1. Procédé de poursuite de la phase d'un signal modulé par une modulation à phase continue à M états, échantillonné (41) de manière à ce que au moins deux échantillons soient obtenus par période symbole et traité par portion de N symboles, ledit procédé étant **caractérisé en ce que** :

   - un vecteur complexe V(n) représentatif de l'état d'amplitude et de phase du signal reçu est déterminé (44) pour chaque période symbole avec un décalage d'une demi période symbole (43) par rapport au rythme symbole du récepteur ;
   - une mesure de niveau (50, 53) est effectuée pour chaque période symbole sur la partie réelle ou imaginaire de deux échantillons complexes U(n) et U(n-1) répartis avec un décalage sensiblement d'une demi période symbole de part et d'autre de l'instant d'estimation du vecteur complexe V(n) ;
   - les vecteurs complexes V(n) sont associés (55) pour chaque période symbole à un des M points de la constellation de la modulation à phase continue par une fonction de correspondance (51) prenant en entrée les niveaux des échantillons U(n) et U(n-1) et permettant de trouver le point de la constellation le plus proche ;
   - une estimation moyenne du décalage de la phase sur une période de N symboles est calculée (60,61,62,63) pour chacun des M points de la constellation de la modulation à phase continue en faisant la différence entre l'estimation moyenne de la phase du signal et la valeur de phase théorique associée à chaque point de la constellation de la modulation à phase continue ;
   - une estimation absolue du décalage de la phase sur une période de N symboles est calculée (64) en faisant la moyenne des estimations moyennes du décalage de la phase associées à chacun des M points de la constellation de la modulation à phase continue ;

- une estimation différentielle du décalage de la phase sur une période de N symboles est calculée (64) en faisant la moyenne des différences de décalages de phase moyens entre points consécutifs de la constellation.

2. Procédé selon la revendication 1 **caractérisé en ce que** la fonction de correspondance (51) permettant d'associer les vecteurs complexes V(n) à un des M points de la constellation de la modulation à phase continue (55) comprend une table de vérité se basant sur le résultat de la projection des échantillons complexes U(n) et U(n-1) sur l'axe réel ou imaginaire après avoir décidé d'une valeur en fonction du niveau détecté (50, 53), c'est-à-dire +1 pour un niveau de projection supérieur à 0 et -1 pour un niveau de projection inférieur à 0, et faisant correspondre un des M symboles de la constellation à un couple de -1 /+1 calculé pour chaque couple d'échantillons U(n) et U(n-1).

3. Procédé selon l'une des revendications précédentes **caractérisé en ce que** le signal reçu est égalisé en fréquence (42) avant l'estimation des vecteurs complexes V(n).

4. Procédé selon l'une des revendications précédentes caractérisé en ce le signal reçu est égalisé (48) avant le traitement des échantillons U(n) et U(n-1) en utilisant un filtre adaptatif.

5. Procédé selon l'une des revendications précédentes **caractérisé en ce que** sur la durée de la période de traitement de N symboles et pour chaque point de la constellation, un vecteur complexe moyen (Vi(n)) est calculé (56) à l'aide des vecteurs Vi(n) associés (55) à chacun des points i de ladite constellation ;

6. Procédé selon la revendication 5 **caractérisé en ce que** l'argument des vecteurs complexes moyens (Vi(n)) associés à chacun des M points de la constellation est comparé à l'argument théorique du point associé de la constellation et est utilisé pour estimer le décalage moyen de la phase (60, 61, 62, 63) pour chacun de M points de la constellation ;

7. Procédé de synchronisation d'un signal modulé par une modulation à phase continue à M états **caractérisé en ce qu'**il utilise le procédé de poursuite selon l'une des revendications précédentes et **en ce que** :

   - la phase du signal reçu est corrigée (65) en paramétrant une boucle à verrouillage de phase (46) avec l'estimation absolue du décalage de phase résultant de l'application du procédé ;
   - le rythme symbole du récepteur est corrigé en paramétrant un filtre passe tout à retard programmable (67) avec une valeur de retard temporel calculée (66) à l'aide de l'estimation différentielle du décalage de phase résultant de l'application du procédé.

8. Procédé selon la revendication 7 **caractérisé en ce que** la valeur de retard temporel utilisée pour la poursuite du rythme symbole est calculée (66) en utilisant une méthode de type proportionnelle intégrale.

9. Procédé selon l'une des revendications 7 ou 8 **caractérisé en ce que** l'estimation et la correction de la phase du signal sont réalisées de manière itérative, une première estimation absolue du décalage de la phase (73) étant conduite sur N symboles du signal, l'erreur résiduelle après correction (74) étant ré-estimée après correction de la phase appliquée à ces N symboles (71) pour une seconde correction, le processus pouvant être ainsi répété un nombre donné de fois.

10. Procédé selon la revendication 9 **caractérisé en ce que** le décalage de phase absolu estimé après plusieurs itérations successives est la somme (72) des estimations de décalage de phase obtenues après chaque itération.

11. Dispositif de réception mettant en oeuvre le procédé de synchronisation selon l'une des revendications 7 à 10, ledit dispositif étant **caractérisé en ce qu'**il comporte au moins :

   - un circuit radio fréquence permettant de convertir le signal en bande de base ;
   - des moyens de traitement mettant en oeuvre le procédé de synchronisation selon l'une quelconque des revendications 7 à 10;
   - une zone de mémoire permettant notamment de stocker les vecteurs complexes V(n), les niveaux des échantillons U(n), les estimations moyennes du décalage de la phase pour chacun des M points de la constellation de la modulation, ainsi que l'estimation moyenne globale du décalage de la phase sur une période de N symboles.

**Claims**

1. A method for tracking the phase of a signal modulated by a continuous phase modulation with M-states, sampled (41) so that at least two samples are obtained per symbol period and processed per portion of N symbols, said method being **characterised in that**:

   - a complex vector V(n) representing the amplitude and phase state of the received signal is determined (44) for each symbol period with a shift of half a symbol period (43) relative to the symbol rate of the receiver;

- a level measurement (50, 53) is performed for each symbol period on the real or imaginary part of two complex samples U(n) and U(n-1) distributed with a shift that is essentially half a symbol period either side of the estimating instant of the complex vector V (n);

- the complex vectors V(n) are associated (55) for each symbol period with one of the M points of the constellation of the continuous phase modulation by a correspondence function (51) using the levels of samples U(n) and U(n-1) as its input and allowing the point of the closest constellation to be found;

- a mean estimate of the shift of the phase over a period of N symbols is calculated (60, 61, 62, 63) for each of the M points of the constellation of the continuous phase modulation by calculating the difference between the mean estimate of the phase of the signal and the theoretical phase value associated with each point of the constellation of the continuous phase modulation;

- an absolute estimate of the shift of the phase over a period of N symbols is calculated (64) by calculating the mean of the mean estimates of the shift of the phase associated with each of the M points of the constellation of the continuous phase modulation;

- a differential estimate of the shift of the phase over a period of N symbols is calculated (64) by calculating the mean of the differences of the mean phase shifts between consecutive points of the constellation.

2. The method according to claim 1, **characterised in that** the correspondence function (51) that allows the complex vectors V(n) to be associated with one of the M points of the constellation of the continuous phase modulation (55) comprises a truth table based on the result of the projection of the complex samples U(n) and U(n-1) on the real or imaginary axis after having decided upon a value as a function of the detected level (50, 53), that is +1 for a projection level that is greater than 0 and -1 for a projection level that is less than 0, and corresponding one of the M symbols of the constellation with a - 1/+1 pair that is calculated for each pair of U(n) and U(n-1) samples.

3. The method according to any one of the preceding claims, **characterised in that** the received signal is frequency equalised (42) before estimating the complex vectors V(n).

4. The method according to any one of the preceding claims, **characterised in that** the received signal is equalised (48) using an adaptive filter before samples U(n) and U(n-1) are processed.

5. The method according to any one of the preceding claims, **characterised in that** for the duration of the period for processing N symbols and for each point of the constellation, a mean complex vector <Vi(n)> is calculated (56) using the vectors Vi(n) associated (55) with each of the points i of said constellation.

6. The method according to claim 5, **characterised in that** the argument of the mean complex vectors <Vi(n)> associated with each of the M points of the constellation is compared with the theoretical argument of the associated point of the constellation and is used to estimate the mean shift of the phase (60, 61, 62, 63) for each of the M points of the constellation.

7. A method for synchronising a signal modulated by a continuous phase modulation with M-states, **characterised in that** it uses the tracking method according to any one of the preceding claims, and **in that**:

- the phase of the received signal is corrected (65) by configuring a phase-locked loop (46) with the absolute estimate of the phase shifts resulting from the application of the method;
- the symbol rate of the receiver is corrected by configuring an all pass filter with programmable delay (67) with a calculated time delay value (66) using the differential phase shift resulting from the application of the method.

8. The method according to claim 7, **characterised in that** the time delay value used for tracking the symbol rate is calculated (66) using a method of the integral proportional type.

9. The method according to any one of claims 7 to 8, **characterised in that** the estimate and the correction of the signal phase are performed in an iterative manner, a first absolute estimate of the phase shift (73) being conducted on N symbols of the signal, the residual error following correction (74) being re-estimated following correction of the phase applied to these N symbols (71) for a second correction, so that the process can be repeated for a given number of times.

10. The method according to claim 9, **characterised in that** the absolute phase shift estimated following a plurality of successive iterations is the sum (72) of the phase shift estimates obtained following each iteration.

**11.** A receiving device implementing the synchronisation method according to any one of claims 7 to 10, said device being **characterised in that** it at least comprises:

- a radio-frequency circuit allowing the signal to be converted into a base band;
- processing means implementing the synchronisation method according to any one of claims 7 to 10;
- a memory zone that notably allows storage of the complex vectors V(n), the sampling levels U(n), the mean estimates of the phase shift for each of the M points of the constellation of the modulation as well as the overall mean estimate of the phase shift over a period of N symbols.

**Patentansprüche**

**1.** Verfahren zum Verfolgen der Phase eines durch kontinuierliche Phasenmodulation mit M Zuständen modulierten Signals, so abgetastet (41), dass wenigstens zwei Samples pro Symbolperiode erhalten werden, und bearbeitet pro Abschnitt von N Symbolen, wobei das Verfahren **dadurch gekennzeichnet ist, dass**:

- ein komplexer Vektor V(n), der den Amplituden- und Phasenzustand des empfangenen Signals repräsentiert, für jede Symbolperiode mit einer Verschiebung von einer halben Symbolperiode (43) relativ zum Symbol des Empfängers ermittelt (44) wird;
- eine Pegelmessung (50, 53) für jede Symbolperiode am realen oder imaginären Teil von zwei komplexen Samples U(n) und U(n-1) durchgeführt wird, die mit einer Verschiebung von im Wesentlichen einer halben Symbolperiode auf beiden Seiten des Schätzungszeitpunkts des komplexen Vektors V(n) verteilt sind;
- die komplexen Vektoren V(n) für jede Symbolperiode mit einem der M Punkte der Konstellation der kontinuierlichen Phasenmodulation durch eine Korrespondenzfunktion (51) unter Verwendung der Pegel der Samples U(n) und U(n-1) als Eingang assoziiert sind, so dass der Punkt der nächstliegenden Konstellation gefunden werden kann;
- eine mittlere Schätzung der Phasenverschiebung über eine Periode von N Symbolen für jeden der M Punkte der Konstellation der kontinuierlichen Phasenmodulation durch Ermitteln der Differenz zwischen der mittleren Schätzung der Phase des Signals und dem mit jedem Punkt der Konstellation der kontinuierlichen Phasenmodulation assoziierten theoretischen Phasenwert berechnet (60, 61, 62, 63) wird;

- eine absolute Schätzung der Phasenverschiebung über eine Periode von N Symbolen durch Ermitteln des Mittelwertes der mittleren Schätzungen der Verschiebung der mit jedem der M Punkte der Konstellation der kontinuierlichen Phasenmodulation assoziierten Phase berechnet (64) wird;
- eine Differenzschätzung der Phasenverschiebung über eine Periode von N Symbolen durch Ermitteln des Mittelwertes der Differenzen der mittleren Phasenverschiebungen zwischen aufeinander folgenden Punkten der Konstellation berechnet (64) wird.

**2.** Verfahren nach Anspruch 1, **dadurch gekennzeichnet, dass** die Korrespondenzfunktion (51), die eine Assoziation der komplexen Vektoren V(n) mit einem der M Punkte der Konstellation der kontinuierlichen Phasenmodulation (55) zulässt, eine Wahrheitstabelle auf der Basis des Ergebnisses der Projektion der komplexen Samples U(n) und U(n-1) auf der realen oder imaginären Achse umfasst, nachdem eine Entscheidung über einen Wert in Abhängigkeit von dem erkannten Pegel (50, 53) gefällt wurde, d.h. +1 für einen Projektionspegel größer als 0 und -1 für einen Projektionspegel kleiner als 0, und entsprechend einem der M Symbole der Konstellation mit einem Paar -1/+1, das für jedes Paar von U(n) und U(n-1) Samples berechnet wird.

**3.** Verfahren nach einem der vorherigen Ansprüche, **dadurch gekennzeichnet, dass** das empfangene Signal vor dem Schätzen der komplexen Vektoren V(n) frequenzentzerrt (42) wird.

**4.** Verfahren nach einem der vorherigen Ansprüche, **dadurch gekennzeichnet, dass** das empfangene Signal mit einem adaptiven Filter vor dem Verarbeiten der Samples U(n) und U(n-1) entzerrt (48) wird.

**5.** Verfahren nach einem der vorherigen Ansprüche, **dadurch gekennzeichnet, dass** für die Dauer der Periode des Verarbeitens von N Symbolen und für jeden Punkt der Konstellation ein mittlerer komplexer Vektor <Vi(n)> mittels der mit jedem der Punkte i der Konstellation assoziierten (55) Vektoren Vi(n) berechnet (56) wird.

**6.** Verfahren nach Anspruch 5, **dadurch gekennzeichnet, dass** das Argument der mit jedem der M Punkte der Konstellation assoziierten mittleren komplexen Vektoren <Vi(n)> mit dem theoretischen Argument des assoziierten Punkts der Konstellation verglichen und zum Schätzen der mittleren Verschiebung der Phase (60, 61, 62, 63) für jeden der M Punkte der Konstellation verwendet wird.

**7.** Verfahren zum Synchronisieren eines durch eine kontinuierliche Phasenmodulation mit M Zuständen modulierten Signals, **dadurch gekennzeichnet, dass** es das Verfolgungsverfahren nach einem der vorherigen Ansprüche verwendet, und dadurch, dass:

    - die Phase des empfangenen Signals durch Konfigurieren eines Phasenregelkreises (46) mit der absoluten Schätzung der Phasenverschiebung aufgrund der Anwendung des Verfahrens korrigiert (65) wird;
    - der Symboltakt des Empfängers durch Konfigurieren eines Allpassfilters mit programmierbarer Verzögerung (67) mit einem berechneten (66) Zeitverzögerungswert anhand der von der Anwendung des Verfahrens resultierenden Differenzschätzung der Phasenverschiebung korrigiert wird.

8. Verfahren nach Anspruch 7, **dadurch gekennzeichnet, dass** der zum Verfolgen des Symboltakts verwendete Zeitverzögerungswert mit einem Verfahren des Integral-Proportional-Typs berechnet (66) wird.

9. Verfahren nach Anspruch 7 oder 8, **dadurch gekennzeichnet, dass** die Schätzung und Korrektur der Signalphase auf iterative Weise durchgeführt werden, wobei eine erste absolute Schätzung der Phasenverschiebung (73) an N Symbolen des Signals durchgerührt wird, wobei der Restfehler nach der Korrektur (74) der auf diese N Symbole (71) angewandten Phase für eine zweite Korrektur neu geschätzt wird, wobei der Vorgang für eine gegebene Anzahl von Malen wiederholt werden kann.

10. Verfahren nach Anspruch 9, **dadurch gekennzeichnet, dass** die nach mehreren aufeinander folgenden Iterationen geschätzte absolute Phasenverschiebung die Summe (72) der Phasenverschiebungsschätzungen ist, die nach jeder Iteration erhalten werden.

11. Empfangsvorrichtung zum Ausführen des Synchronisationsverfahrens nach einem der Ansprüche 7 bis 10, wobei die Vorrichtung **dadurch gekennzeichnet ist, dass** sie wenigstens Folgendes umfasst:

    - eine Funkfrequenzschaltung, die eine Basisbandkonvertierung des Signals zulässt;
    - Verarbeitungsmittel zum Ausführen des Synchronisationsverfahrens nach einem der Ansprüche 7 bis 10;
    - eine Speicherzone, die insbesondere das Speichern der komplexen Vektoren V(n), der Abtastpegel U(n), der mittleren Schätzungen der Phasenverschiebung für jeden der M Punkte der Konstellation der Modulation sowie der mittleren Gesamtschätzung der Phasenverschiebung über eine Periode von N Symbolen zulässt.

FIG.1

| NiveauU(n-1) | NiveauU(n) | Phase |
|:---:|:---:|:---:|
| +1 | +1 | Φ0 |
| +1 | −1 | Φ1 |
| −1 | +1 | Φ3 |
| −1 | −1 | Φ2 |

FIG.2

FIG.3

FIG.4

FIG.5

FIG.6

FIG.7

## RÉFÉRENCES CITÉES DANS LA DESCRIPTION

### Documents brevets cités dans la description

- FR 2845546

### Littérature non-brevet citée dans la description

- Coherent Demodulation of Frequency-Shift Keying With Low Deviation Ratio. *IEEE transactions on communications,* Juin 1972

- **Mark R. Shane ; Richard D. Wesel.** Reduced complexity iterative demodulation and decoding of serial concatenated continuous phase modulation. *IEEE International Conference on Communications,* 2002